# EUROPÄISCHE PATENTSCHRIFT

(11) **EP 1 085 954 B1**
(45) Veröffentlichungstag und Bekanntmachung des Hinweises auf die Patenterteilung: **24.07.2002**
(21) Anmeldenummer: 99938170.0
(22) Anmeldetag: 04.06.1999
(51) Int. Cl.: B22C 9/02

(54) **VERFAHREN UND VORRICHTUNG ZUM DIREKTEN HERSTELLEN EINER VERLORENEN GIESSFORM FÜR GUSSSTÜCKE AUS METALL**
METHOD AND DEVICE FOR DIRECTLY PRODUCING AN INVESTMENT CASTING MOLD FOR CASTINGS MADE OF METAL
PROCEDE ET DISPOSITIF DE PRODUCTION DIRECTE D'UN MOULE DE COULEE PERDU POUR LA COULEE DE PIECES EN METAL

(30) Priorität: 06.06.1998 DE 19825448
(43) Veröffentlichungstag der Anmeldung: 28.03.2001
(73) Patentinhaber: Actech GmbH, 09599 Freiberg (DE)
(72) Erfinder: WENDT, Florian, D-09599 Freiberg (DE); DEMARCZYK, Norbert, D-01723 Grumbach (DE); HAUSCHILD, Rüdiger, D-09600 Naundorf (DE)
(74) Vertreter: Borchard, Wolfgang
(86) Internationale Anmeldenummer: DE9901709
(87) Internationale Veröffentlichungsnummer: WO9964188

(56) Entgegenhaltungen:
- EP-A- 0 317 315
- DE-A- 1 758 760
- DE-A- 2 503 229
- DE-A- 2 605 687
- DE-A- 4 038 090
- DE-A- 4 341 325
- DE-A- 19 649 428

## Beschreibung

Die Erfindung betrifft ein Verfahren und eine Vorrichtung zum direkten Herstellen einer verlorenen Gießform für Gußstücke aus Metall sowie die Fertigung von Gußteilprototypen und Einzelstücken im kleinen und mittleren Größen - und Stückmassebereich, durch Bearbeitung einer unter Verwendung von aushärtbaren Bindemitteln hergestellten Sandform.

Verlorene Formen für Gußteilprototypen und Einzelstücke werden gemäß DE 43 41 325 A 1 als Schaumstoffmodell mit Hilfe einer numerisch gesteuerten Fräsmaschine hergestellt. Die numerisch gesteuerte Fräsmaschine enthält einen Fräser, der mit Hilfe einer Portaleinrichtung entlang der drei Raumrichtungen bewegt werden kann. Um eine schnelle und genaue Bearbeitung des Werkstückes zu gewährleisten, werden die aus einem Schaumstoffblock herausgefrästen Polystyrol - Schaumstoffpartikel unmittelbar im Bereich des Fräsers abgesaugt. Zur Reststoffabsaugung ist der Fräser als Hohlkörper mit Absaugöffnungen ausgebildet und mittels Leitungen mit einer Absaugeinrichtung verbunden. Da die Werkzeugkosten für die Herstellung des Fräsers vergleichsweise hoch sind, können nach diesem Verfahren Gießformen aus Gießereiformsand nicht hergestellt werden. Der durch die Bearbeitung einer verlorenen Gießform hervorgerufene hohe Verschleiß würde sich nachteilig auf die Formgenauigkeit auswirken und erhebliche Werkzeugkosten erfordern. Darüber hinaus sind Modelle aus Schaumstoff für kleine Gußteile nicht geeignet. Dünnwandige und komplizierte Strukturen sind nur schwer herstellbar. Nachteilig ist die leichte Zerbrechlichkeit des Modells, bei dem die Nachgiebigkeit zu großen Maßabweichungen führen kann. Für die Umweltverträglichkeit sind spezielle Ausrüstungen der Gießerei notwendig.

Um eine Sandform ohne Urmodell herstellen zu können, wurde in der DE 26 05 687 C 3 vorgeschlagen, den Formsand in einen Formkasten einzustampfen und den Formhohlraum mit Schneid - und Fräswerkzeugen auszuhöhlen, die mit einer Profilier - oder Kopierfräsmaschine in Wirkverbindung stehen. Um den Werkzeugverschleiß zu senken wurde des weiteren vorgeschlagen, daß das Aushöhlen des Sandblockes vorgenommen wird, wenn die Druckfestigkeit 2 - 10 kg/ cm² vorzugsweise 2 - 5 kg/ cm² beträgt. Das bedeutet, daß die Bearbeitung vor dem vollständigen Aushärten des Bindemittels, jedoch bei annehmbarer Festigkeit vorgenommen werden muß. Dieser Vorgang ist technologisch nicht beherrschbar und mit einer Vielzahl von Fehlerquellen verbunden. Aus diesem Grunde konnte sich die Bearbeitung einer nicht ausgehärteten Sandform in der Praxis nicht durchsetzen. Das in der Erfindungsbeschreibung näherbezeichnete Werkzeug zum Aushöhlen des Sandblockes weist darüber hinaus ein um eine Vertikalachse rotierendes Messer auf, mit dem nur gewöhnliche zylindrische Formen darstellbar sind.

In der Offenlegungsschrift DE 196 49 428 A1 wurde zur Herstellung von Formen für große und komplizierte Gußteile ohne Verwendung einer Prototypmodelleinrichtung der Vorschlag unterbreitet, einen Sandblock zu bearbeiten, der eine Druckfestigkeit im Bereich von 20 bis 80 kg / cm² insbesondere im Bereich von 40 bis 60 kg / cm² aufweist. Da eine unter Normalbedingung ausgehärtete Gießform aus Gießereiformsand bei einem üblichen Bindemittelanteil regelmäßig eine Druckfestigkeit von mindestens 60 kg / cm² aufweist, bezieht sich der vorzugsweise angegeben Bereich der Druckfestigkeit auch auf eine nicht vollständig ausgehärtete Sandform oder auf eine Form mit einem vergleichsweise geringen Bindemittelgehalt, um die Lebensdauer der Werkzeuge zu erhöhen. Beides ist für eine exakte Formherstellung wegen der geringen Festigkeit mit erheblichen Nachteilen behaftet.

Das Verfahren ist dadurch bezeichnet, daß ein Block aus einem verfestigten Pulvergranulatmaterial mit einer automatischen Verarbeitungsmaschine bearbeitet wird. Ein Werkzeugwechsler und eine Absaugung des abgetragenen Materials in Bearbeitungsnähe sind genannt. Das Pulvergranulatmaterial wird als ein spezielles Sandmaterial spezifiziert, welches mit Bindemittel, wie Wasserglas, das mit CO2 - Gas ausgehärtet wird, oder Härter, wie Furanharz, das mit Säure gehärtet wird, in Form eines quaderförmigen Blockes gebunden und verfestigt vorliegt. Die Verarbeitungsmaschine verfügt über eine Art Werkzeugmaschinensteuerung. Eine CAM - Software dient der Erzeugung eines Programms auf dessen Grundlage die Bearbeitung erfolgt. Das Programm für die herzustellende Form kann nach Zeichnung oder aus CAD - Daten erstellt werden.

Die Nachteile der direkten Bearbeitung eines Sandstoffblocks mit der vorgeschlagenen automatischen Verarbeitungsmaschine liegen in dem in der Schrift bezeigten hohen Verschleiß der Werkzeuge, der nur durch eine geringere Festigkeit des Sandstoffblockes gesenkt werden kann. Aus diesem Grunde muß die Bearbeitung innerhalb der Abbindezeit vorgenommen werden, was desgleichen aus technologischen Gründen sehr problematisch ist.

Eine Gießform unter Verwendung einer schnell härtenden Formstoffmischung mit geringer Abbindezeit ist aus diesen Gründen unausführbar. Die vorgeschlagene Lösung ist auf die vorzugsweise Verwendung von CO₂ - beziehungsweise Furanharzformstoffen beschränkt, so daß damit nicht alle in Frage kommenden Gießereiformstoffe Verwendung finden können.

Bekannt ist aus der EP - A - 0317 315 die automatische Herstellung von Gießformen mit einer CNC gesteuerten Werkzeugmaschine ohne die Anfertigung von Modellen. Um eine Gießform zu erzeugen, werden aus Gießereisand mit einem alkalischen Phenolharzbinder Blöcke geformt, mit Gas gehärtet und anschließend mit einer CNC - Bohrmaschine in drei Achsen bearbeitet. Einzelne Gießformteile werden mit einem CNC Montageroboter zu einer vollständigen Gießform zusammengefaßt und in einer automatischen Gießlinie mit der flüssigen Schmelze aus Metall gefüllt. Problematisch ist die enorme Abtragungsrate von mindestens 1500 cm³ pro Minute des Gießsandes bei der CNC - Bearbeitung, was eine geringere Genauigkeit gegenüber der Metallbearbeitung zur Folge hat. Um den Betrag der CNC - Bearbeitung zu verringern und die Genauigkeit zu erhöhen, sollen Blöcke hergestellt werden, die bereits einen vorgeformten Hohlraum enthalten. Hierzu werden in einem Rahmen eingespannte höhenverstellbare Stäbe mit rechteckigem Querschnitt verwendet, die in den Gießereiformstoff gedrückt werden. Nachteilig ist bei der automatischen Fertigung der Gießformen die geringe Festigkeit des Formstoffes, die der Festigkeit von Grünsand entspricht. Dadurch kann der Formstoff nicht mit der erforderlichen Maßhaltigkeit bearbeitet und in die exakte Gießform überführt werden. Ein weiterer Nachteil ist der hohe Anfall von Materialabtrag, durch den der weiche Gießereiformstoff bei der CNC - Bearbeitung in Mitleidenschaft gezogen wird. Es wird somit eine vergleichsweise große Zahl von fehlerhaften Gießformen und Gußteilen produziert. Für die Herstellung sehr präziser Gußteilprototypen ist das bekannte Verfahren damit nicht geeignet.

Die Erfindung bezweckt unter Vermeidung oder Minderung der genannten Nachteile des Standes der Technik ein Verfahren und eine Vorrichtung zum direkten Herstellen einer verlorenen Gießform durch Bearbeitung einer ohne Einschränkung unter Verwendung von aushärtbaren Bindemitteln hergestellten Sandform. Insbesondere soll die Erfindung den Verschleiß der Werkzeuge senken und die damit einhergehenden Werkzeugkosten verringern sowie die Maßhaltigkeit und Genauigkeit bei Nachbildung der Form erhöhen

Die Aufgabe wird durch das Verfahren mit den Merkmalen des Anspruchs 1 gelöst. Dabei wird unter Verwendung eines variablen oder festen Formkastens mit einer Modelleinrichtung eine Rohform hergestellt wird, welche die Konturen der Gießform zuzüglich einer Bearbeitungszugabe für das Formstoff - Fräsen enthält. Nach dem Auffüllen des Formkastens mit aushärtbaren Gießereiformstoffen entsteht nach dem Aushärten und Entformen die Rohform, die durch Hochgeschwindigkeitsbearbeitung, durch Fräsen oder durch 3 - D - Bearbeitung von Freiformflächen in die Gießform überführt wird.

Durch das vorgeschlagene Bearbeitungsverfahren des direkten Formstoff- Fräsens wird ein neues Eigenschaftsprofil der mit bekannten Technologien der Hochgeschwindigkeitsbearbeitung hergestellten Gießform mit quantitativen und qualitativen Merkmalen geschaffen, die nach einem weiteren Merkmal der Erfindung darauf zurückzuführen sind, daß die Bearbeitung der Rohform im ausgehärteten Zustand erfolgt, bei der die Druckfestigkeit mindestens 80 kg / cm² beträgt.

Kennzeichnend für das Formstoff- Fräsen ist somit die Herstellung von Formkonturen in ausgehärtetem Gießereiformstoff. Für die Automatisierung der Fräsbearbeitung ist eine Anhäufung abgetragenen Materials im Bearbeitungsraum schädlich. Die Folgen sind Ungenauigkeiten der Oberflächenkontur der Gießform, erhöhter Verschleiß der Werkzeuge oder Schäden an der Maschine. Über die Herstellung von Rohformen wird der Materialabtrag minimiert. Dem Entstehen von Anhäufungen abgetragenen Materials wird entgegengewirkt.

Die Herstellung von Rohformen weist weitergehende Vorteile auf, die durch die Einsparung von Formstoff und Energie, die Minimierung der Abfälle und Stäube, die Verschleißminimierung an Werkzeug und Maschine sowie durch die Senkung der Maschinenhauptzeiten gekennzeichnet sind. Darüber hinaus ergibt sich eine besondere Wirtschaftlichkeit bei großvolumigen Formen beziehungsweise Formteilen.

Im Rahmen der Erfindung ist des weiteren vorgesehen, daß der Begriff des direkten Formstoff - Fräsens nicht nur das Fräsen von Gießereiformstoffen schlechthin, sondern eine technologische Kette von Verfahren sowie Vorrichtungen zur Herstellung verlorener Formen umfaßt. Dazu gehört die Herstellung der Rohform mit einer variablen Modelleinrichtung aus einer Anordnung von Quadersegmenten, Würfelsegmenten, Gewindebolzen oder klemmbaren Rundstäben gemäß den Anspruchen 5-7 ebenso wie die Abführung des Materialabtrags. Voraussetzung für die technologische Umsetzung des direkten Formstoff - Fräsens ist die Bereitstellung spezieller Vorrichtungen zur Herstellung der Rohformen und zur Bearbeitung dieser in der Bearbeitungsmaschine, was im nachfolgenden mit mehreren Ausführungsbeispielen näher erläutert werden soll. Weitere Vorteile und Ausgestaltungen der Erfindung ergeben sich aus den Unteransprüchen und den Ausführungsbeispielen.

In den dazugehörigen Zeichnungen zeigen
- Figur 1: den Ablauf des Verfahrens bei der Herstellung einer Gießform,
- Figur 2: einen variablen Formkasten mit Modelleinrichtung auf der Basis von aufrecht stehenden Quadersegmenten ( Balkensegment) zur Herstellung der Rohform,
- Figur 3: ein Balkensegment,
- Figur 3a: ein Würfelsegment,
- Figur 4: einen Formkasten nebst Modelleinrichtung mit einer Anordnung von Gewindebolzen oder mit einer Anordnung von klemmbaren Rundstäbe,
- Figur 5: die Herstellung der Rohform unter Verwendung einer Anordnung von Gewindebolzen,
- Figur 6: einen klemmbaren Rundstab,
- Figur 7: den klemmbaren Rundstab gemäß Figur 6 im Schnitt und
- Figur 8: die Herstellung der Rohform unter Verwendung einer Anordnung von klemmbaren Rundstäben
in schematischer Darstellung.

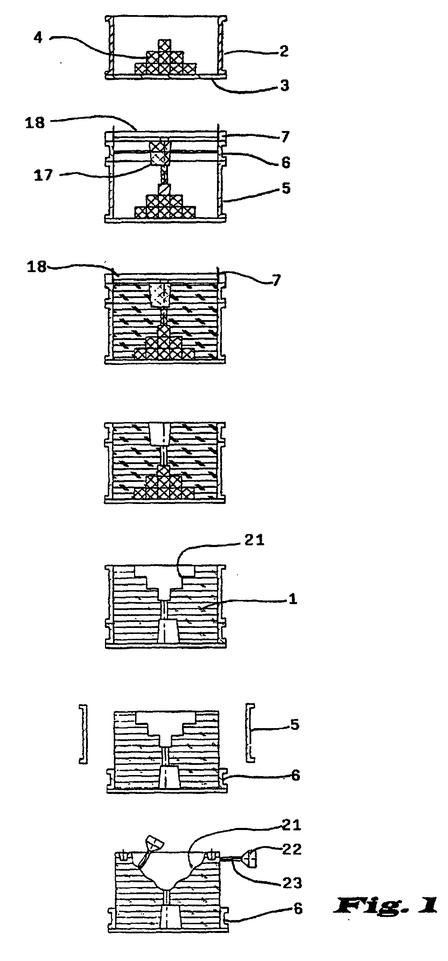

Figur 1 zeigt stark schematisiert den Ablauf des Verfahrens zur Herstellung einer Rohform 1 aus ausgehärtetem Gießereiformstoff, der nach seiner vollständigen Aushärtung eine Druckfestigkeit von mindestens 60 bis 80 kg / cm² aufweist. Zur Herstellung der Rohform 1 können ohne Einschränkung bekannte Formgrundstoffe ( Gießereisande, Schamotte, Korunde oder Carbonsand ) entweder rein oder in jedem Verhältnis als Mischung eingesetzt werden. Als Bindemittel können organische Zusammensetzungen wie Harze, Novolake beziehungsweise Resole oder anorganische Bindemittel wie Wasserglas mit beliebigen Zusätzen und Zuschlägen wie Härter, Säuren, Trenn - und Lösungsmittel und so weiter verwendet werden. Der selbsthärtende Gießereiformstoff wird in einen Formkasten 2 eingebracht. Der Formkasten 2 steht auf einer Modellplatte 3 als Träger der variablen Modelleinrichtung 4 und der Modelle für das Gieß - und Speisesystem 17.

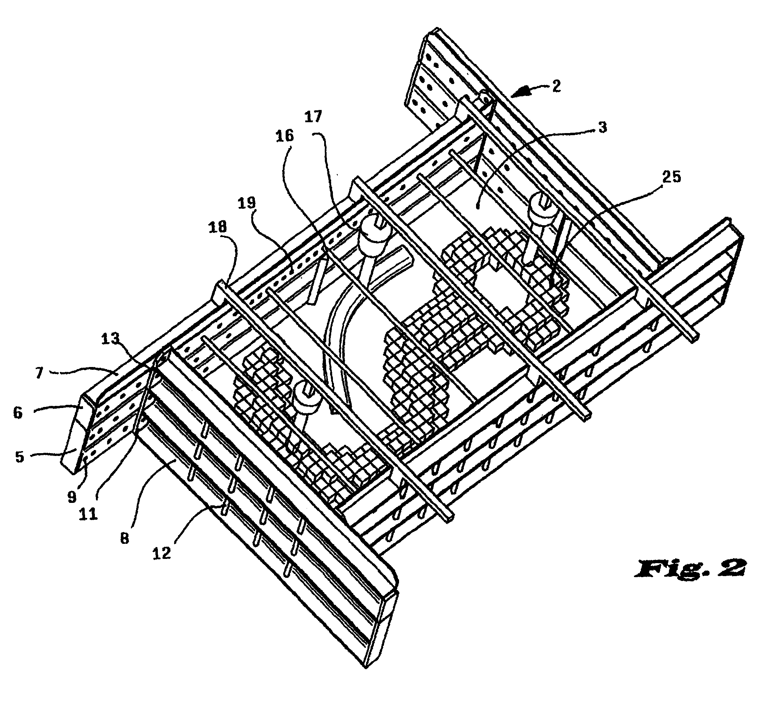

Der Formkasten 2 besteht aus vier Seitenwänden 5, einem Hilfsrahmen 6 und einem Füllrahmen 7. Formkasten 2, Hilfsrahmen 6 und Füllrahmen 7 sind im Raster variabel verstellbar. Die Seitenwände 5 können gemäß Figur 2 aus mehreren baugleichen U - Profilen 8 bestehen. Die U - Profile 8 sind gleich lang und haben rasterförmig angeordnete Bohrungen 9. Die Höhe der Seitenwände 5 ist über die Anzahl der U - Profile 8 variabel einstellbar. Die U - Profile 8 sind an den Gurten 11 miteinander verbunden. Zur Versteifung besitzen die U - Profile 8 zwischen beiden Gurten 11 Querstreben 12 aus Rund - oder Flachmaterial. Diese sind in gleichen Abständen angeordnet und dienen gleichzeitig der formschlüssigen Verbindung zum Handling - Greifer. Die Innenmaße des Formkastens 2 sind damit über das Bohrungsraster einstellbar. Das Rastermaß des Formkastens 2 entspricht dem Rastermaß der variablen Modelleinrichtung 4. Hilfsrahmen 6 und Füllrahmen 7 sind ebenfalls im Raster verstellbar. Der Hilfsrahmen 6 wird auf die Seitenwände 5 aufgesetzt und ist mit diesem über geeignete Verbindungselemente zusammengefaßt. Der Formkasten 2 ist hierdurch in seinen Grundabmessungen und in seiner Höhe einstellbar. Auf dem Hilfsrahmen 6 wiederum wird der Füllrahmen 7 aufgesetzt. Die Modelle für das Gieß - und Speisesystem 17 werden an Quertraversen 18 hängend befestigt, die den Füllrahmen 7 überbrücken und auf dem Hilfsrahmen 6 fixiert sind. Die Anordnung der Modelle für das Gieß - und Speisesystem 17 kann beliebig gewählt werden. Diese schließen mit der Oberkante des Hilfsrahmens 6 ab. Vor dem Füllen des Formkastens 2 werden in den Hilfsrahmen 6 und zwischen den Seitenwänden 5 an noch freien Stellen Armierungen 16 eingefügt. Diese dienen der Stabilisierung der Rohform 1 für das Handling und zur Aufnahme der Gießdrücke. Als Armierung 16 können Stahlprofile dienen. Der Hilfsrahmen 6 verfügt dazu über entsprechende lochförmige oder langlochförmige Durchbrüche 19.

Nach dem Befüllen mit kaltaushärtbarem Formstoff und anschließender Verdichtung werden die Quertraversen 18 und der Füllrahmen 7 entfernt und die Form wird abgestrichen.

Nach Erreichen der Ausschalfestigkeit werden die Modelle für das Gieß - und Speisesystem 17 gezogen. Die so entstandene Rohform 1 wird um 180° gewendet. Hierbei sind die in den Seitenwänden 5 eingefügten Querstreben 12 im Formschluß zu einer nicht weiter dargestellten Wendevorrichtung hilfreich. Danach erfolgt das vollständige Aushärten des Formstoffs. Wesentlich ist, daß die Aushärtung nicht aus Gründen einer sich unmittelbar anschließenden Bearbeitung und vor dem Erreichen einer bestimmten Druckfestigkeit abgebrochen werden muß.

Abschließend wird mit Hilfe von für die Hochgeschwindigkeitsbearbeitung geeigneten Bearbeitungswerkzeugen die Bearbeitungszugabe der Rohform 1 abgetragen und die endgültige Gießform hergestellt.

Zum seitlichen Bearbeiten der Rohform 1 ist es unvermeidlich, die Seitenwände 5 des Formkastens 2 zu entfernen. Zum Spannen und Handling der Rohform 1 ist deshalb der Hilfsrahmen 6 notwendig. Der Hilfsrahmen 6 ist für die Versteifung der Rohform 1 beim Heben und Drehen der Form ohne die Seitenwände 5 des Formkastens 2 mittels Hebezeug und Greifer erforderlich. Außerdem dient der Hilfsrahmen 6 dem Spannen und Positionieren der Rohform 1 auf dem Maschinentisch einer Bearbeitungsmaschine für das Formstoff - Fräsen und zum Verspannen der beiden Gießformhälften zum Gießen des Gußteils bei Verwendung der Gießform ohne Seitenwände 5. Am Hilfsrahmen 6 sind dazu an jeder Seite jeweils Spannmittel vorhanden, die an sich bekannt und deshalb nicht weiter beschrieben sind. Das Verspannen kann deshalb herkömmlich mit Spannhaken erfolgen. Das Positionieren von zwei Formhälften zueinander zur Aufnahme des Gießdrucks kann über formschlüssige Verriegelungen im Formstoffballen, beispielsweise mit kegelförmigen Zapfen und Aufnahmen beziehungsweise Halbkugeln und Pfannen vorgenommen werden, die ebenfalls gefräst werden.

Für die Automatisierung des Formstoff- Fräsens, das die Hochgeschwindigkeitsbearbeitung und die 3 - D Bearbeitung von Freiformflächen umfassen soll, ist eine Anhäufung abgetragenen Gießereiformstoffes im Bearbeitungsraum, insbesondere in einer muldenförmigen Formkontur 21 des ausgehärteten Gießereiformstoffes schädlich. Die Folgen sind Ungenauigkeiten in der Oberflächenkontur der Gießform, erhöhter Verschleiß der Werkzeuge oder Schäden an der Bearbeitungsmaschine. Es gibt mehrere Wege, eine Anhäufung abgetragenen Materials durch eine der nachfolgend beschriebenen Maßnahmen allein oder in Kombination zu umgehen.

Das Abführen des Materialabtrags kann durch Ausnutzung der Schwerkraft bei Fräsbearbeitung über Kopf vorgenommen werden. Hierbei wird die Rohform 1 mit Hilfe des Hilfsrahmens 6 auf dem Maschinentisch aufgespannt und zusammen mit der Bearbeitungsmaschine um 180 ° um eine Horizontalachse geschwenkt. Der bei der Fräsbearbeitung abgetragene Formstoff fällt sofort heraus. Vorteilhaft ist, daß der abgetragene Formstoff während der Maschinenhauptzeit abgeführt werden kann. Formstoffabfälle können leicht aufgefangen und abtransportiert werden. Um den Hauptspindelantrieb, die Werkzeugspanneinrichtung und die Linearführungen gegenüber dem aufgewirbelten und herabfallenden Materialabtrag zu schützen, ist eine Kapselung vorgesehen.

Eine vergleichsweise einfachere Abführung des Materialabtrags durch Ausnutzung der Schwerkraft kann durch eine Fräsbearbeitung in der Vertikalen erreicht werden. Hierbei fällt der Großteil des Matererialabtrages aus einer muldenförmigen Formkontur 21 und die Formstoffabfälle können ebenso leicht aufgefangen und abtransportiert werden. Die Bearbeitungsachsen, der Hauptspindelantrieb und die Werkzeugspanneinrichtung sind weniger stark dem Formstoffkontakt ausgesetzt.

Während der Bearbeitung in der Horizontalen entsprechend Figur 1 kann der Materialabtrag durch Absaugen erfolgen, was insbesondere bei großen Rohformen 1 vorteilhaft ist. Das Aufspannen der Rohform 1 erfolgt einfach mit dem Hilfsrahmen 6, wobei das Abführen des Materialabtrages während der Maschinenhauptzeit vorgenommen werden kann. Das hat den Vorzug, daß bei Flächenportalausführung die Linearachsen der Bearbeitungsmaschine oberhalb der muldenförmigen Formkontur 21 liegen und durch das Absaugen des vom Werkzeug aufgewirbelten Formstoffes relativ gut vor Staub geschützt sind.

Nachteilig ist, daß das Abführen des Formstoffabtrages während der Bearbeitung in fünf Achsen schwierig ist. Außerdem können durch das Nachführen des Saugrohres in Koppelung mit der Hauptspindel die Konturen in der Gießform beschädigt werden. Deshalb sollte das Absaugen des Materialabtrags nach der Bearbeitung durchgeführt werden. Zweckmäßig ist, wenn der Materialabtrag schichtweise abgesaugt wird. Nach jeder abgetragenen Materialschicht wird ein senkrechtstehendes Saugrohr in die Werkzeugaufnahme 22 der Frässpindel eingewechselt. Das Fräswerkzeug 23 wird während der Absaugung zwischengeparkt. Das Saugrohr ist an die Niederdruckabsaugung der Bearbeitungsmaschine angeschlossen. Durch konturnahes Abfahren der Werkstückoberfläche wird der Materialabtrag abgesaugt. Eine Beschädigung der Oberflächenkontur der Gießform ist ausgeschlossen. Der Saugrohrquerschnitt kann relativ groß ausgeführt werden, wodurch eine hohe Saugleistung bei vergleichsweise geringem Energieeinsatz für die Materialförderung erzielt wird. Darüber hinaus wird die Absaugung nur kurzzeitig zugeschaltet, dadurch ist ein geringer Energieverbrauch und eine nur kurzzeitige Geräuschbelästigung zu verzeichnen.

Eine weitere Variante zur Beseitigung des Materialabtrages, die nicht mit Zeichnung präzisiert ist, besteht in der Absaugung durch Löcher in der Rohform 1. Dazu werden von der Bearbeitungsmaschine an definierten Stellen Löcher in die Rohform 1 gebohrt, die vorzugsweise an den tiefsten Stellen angeordnet werden. Die Bohrungen werden später wieder verschlossen oder können als Speiser oder Luftabführung gießtechnische Aufgaben erfüllen. Die Absaugung kann durch einen Maschinentisch erfolgen, der zu diesem Zweck über Absaugöffnungen verfügt, die im Raster angeordnet sind. Diese Öffnungen können einzeln verschlossen oder bei Verbindung mit den Löchern in der Rohform 1 geöffnet werden.

Für die Herstellung der Rohform 1 kann eine der variablen Modelleinrichtungen 4 eingesetzt werden, die nachfolgend näher beschrieben sind. Auf diese soll die Erfindung jedoch nicht beschränkt werden. Die folgende Beschreibung setzt die Nutzung von CAD/CAM - Software voraus. Die Kontur der variablen Modelleinrichtung 4 wird mittels CAD - System aus der Kontur der Gießform generiert.

In der 3 - D - Konstruktion des Formenaufbaus sind die Details festgelegt. Diese umfassen die Nullpunktmarken, die innere und äußere Gußteilkontur, die Anordnung der Teilungsebene, die Anordnung der Kerne einschließlich der Kernmarken und des Kernspiels, die Auswahl und Anordnung des Gieß - und Speisesystems 17, die Auswahl und Anordnung der Seitenwände 5 des Formkastens 2 und die Auswahl des Hilfsrahmens 6 mit den Armierungen 16 sowie die Auswahl des Füllrahmens 7.

Für die Herstellung einer Rohform 1 aus kaltaushärtbaren Gießereiformstoffen kann zum Ersten eine variable Modelleinrichtung 4 aus Balkensegmenten 25 eingesetzt werden. Für das Gieß - und Speisesystem 17 bestehen normierte Modelle, die in einer 3 - D Bibliothek erfaßt sind, die auf den vorhandenen Lagerbestand Bezug nimmt. Über eine Variantenkonstruktion sind fehlende Modelle leicht nachzufertigen. Die Höhe der Seitenwände 5 des Formkastens 2 muß größer sein als das Maß der maximalen Formtiefe der zu formenden Rohform 1. Die Größe des Formkastens 2 richtet sich nach der Größe der Modelleinrichtung 4 beziehungsweise der Rohform 1 mit den Armierungen 16. Alle Konturen der variablen Modelleinrichtung 4 und die Teilungsflächen erhalten eine Bearbeitungszugabe. Zur Kontur der späteren Gießform wird dazu eine um den Betrag der Bearbeitungszugabe versetzte Flächenkontur erzeugt, die die variable Modelleinrichtung 4 nachbildet.

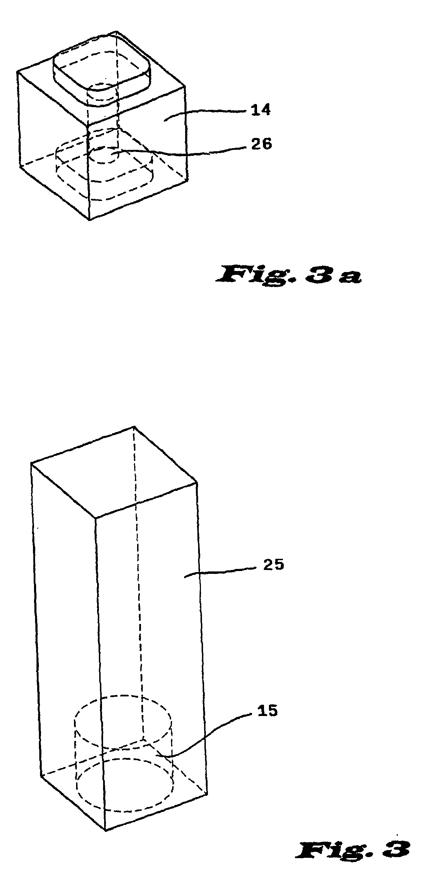

Das Raster des Formkastens 2 nach Figur 2 ist in x - y - Richtung ein Vielfaches der Kantenlänge der Grundfläche eines aufrechtstehenden Balkensegments 25, das in Figur 3 gezeichnet ist. Am CAD - System wird der Formhohlraum zwischen der versetzten Flächenkontur und der Modellplatte 3, die mit der Grundfläche des Formkastens 2 gleich ist, mit Balkensegmenten 25 ausgefüllt. Die Balkensegmente 25 sind dabei wie in einem Flächenraster in x - y - Ebene angeordnet, welches auf der Modellplatte 3 und im CAD - System markiert ist. Die versetzte Flächenkontur als Begrenzung der Rohform 1 darf nicht von Balkensegmenten 25 durchdrungen sein. Hinterschneidungen in Ausformrichtung werden nicht mit Balkensegmenten 25 gefüllt. Die Anordnung von Balkensegmenten 25 bildet die variable Modelleinrichtung 4. Das Volumen des Formkastens 2 abzüglich der Modelleinrichung 4 ergibt nach dem Abformen die Rohform 1. Die Rohform 1 geht in die Fräsbahnprogrammierung ein.

Die Modellplatte 3 bildet die x - y - Ebene der Modelleinrichtung 4. Die Modellplatte 3 kann elektrisch magnetisierbar ausgebildet werden. Die Oberfläche der Modellplatte 3 kann eine dünne Gravur von Rasterlinien erhalten. Die so entstandenen quadratischen Felder sind schachbrettartig numeriert, um den Aufbau der Balkensegmente 25 zu erleichtern. Die Modellplatte 3 kann mit dem Formkasten 2 verriegelt werden.

Jeder Nummer wird ein Balkensegment 25 definierter Länge in Z - Richtung zugeordnet. Das Raster kann ebenso zur Markierung des Werkstücknullpunktes dienen. Diese Zuordnung kann in einer Tabelle ausgedruckt werden. Der Aufbau der Positiv - Form aus Balkensegmenten 25 erfolgt von Hand oder automatisch mit einem Bestückungsroboter. Verwendbar sind zum Beispiel Balkensegmete aus Metall -, Holz - oder Kunststoff mit gleicher Kantenlänge wie oben beschrieben, jedoch mit einer Toleranz von zirka - 0,1 mm.

Die Grundfläche der Balkensegmente 25 besteht aus Stahl 15, um einen festen Halt mit der elektrisch magnetisierbaren Modellplatte 3 herstellen zu können. Nach dem vollständigen Aufbau der variablen Modelleinrichtung 4 werden die einzelnen Balkensegmente 25 elektromagnetisch fixiert.

Zum Schluß wird die aus Balkensegmenten 25 aufgebaute Modelleinrichtung 4 und das Modell für das Gieß - und Speisesystem 17 mit einem Trennmittel eingesprüht beziehungsweise mit einer Folie bedeckt und der Formkasten 2 mit kaltaushärtbarem Gießereiformstoff gefüllt und verdichtet. Nach dem Befüllen mit kaltaushärtbarem Formstoff und anschließender Verdichtung werden die Quertraversen 18 sowie der Füllrahmen 7 entfernt und die Form wird abgestrichen. Danach erfolgt das Aushärten des Formstoffs.

Nach Erreichen der Ausschalfestigkeit werden die Modelle für das Gieß - und Speisesystem 17 gezogen. Die so entstandene Rohform 1 wird um 180° gewendet. Die Modellplatte 3 mit der variablen Modelleinrichtung 4 wird entformt. Nach dem Lösen der magnetischen Arretierung sind die Balkensegmente 25 abnehmbar und in beliebiger Anordnung wiederverwendbar.

Nun kann die Rohform 1 nach Figur 1 in der Fräsmaschine positioniert und gespannt werden. Dazu wird der Hilfsrahmen 6 genutzt. Es ist darauf zu achten, daß der am Rohteil festgelegte Werkstücknullpunkt mit dem programmierten Werkstücknullpunkt übereinstimmt. Das CNC - Programm zum Fräsen der Form kann gestartet werden. Bei abgenommenen Seitenwänden 5 können die Seitenflächen der Rohform 1 bearbeitet werden. Somit sind auch größere, aus mehreren Formsegmenten bestehende Formhälften herstellbar, da seitliche Verriegelungen angearbeitet werden können. Auch Entlüftungsbohrungen sind möglich. Soll der Hilfsrahmen 6 bei der Herstellung größerer Formsegmente hinter den Seitenflächen der Rohform 1 zurückstehen, ist der einstellbare Hilfsrahmen 6 nicht verwendbar. Hierfür ist eine Sonderanfertigung erforderlich.

Anstelle von Balkensegmenten 25 können für die Modelleinrichtung 4 Würfel 14 eingesetzt werden, die zur Ausformhilfe Gewinde 26 aufweisen, die das Ziehen erleichtern. Die Würfel sind formschlüssig und somit verdrehsicher aufeinander steckbar gestaltet, wie aus Figur 3 a ersichtlich ist.

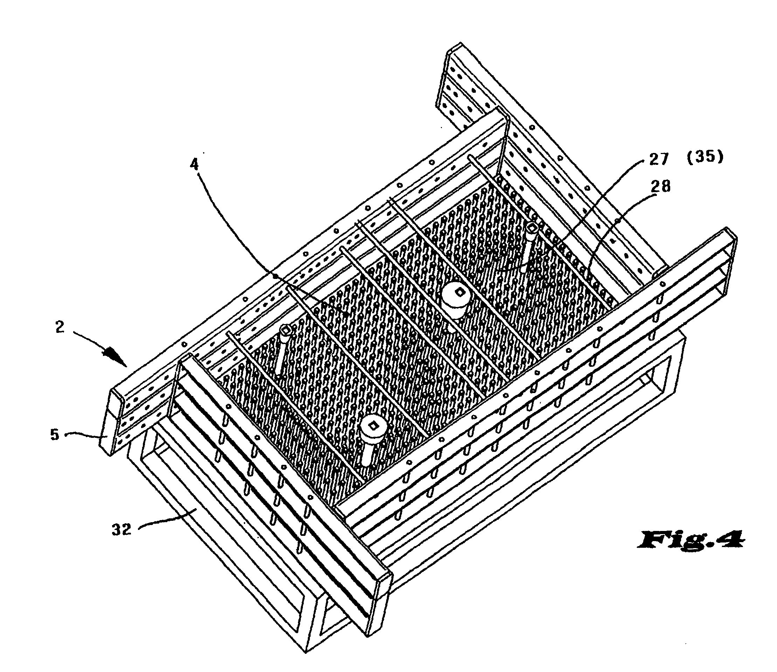

Zweitens kann die Rohform 1 aus kaltaushärtbaren Gießereiformstoffen mit einer variablen Modelleinrichtung 4 aus einer Anordnung von Gewindebolzen 27 nach Figur 4 hergestellt werden.

Das Raster des Formkastens 2 gemäß Figur 4 ist ein Vielfaches des Abstands der Gewindebolzen 27. Mittels CAD - System werden Gewindebolzen 27 auf der Ebene der Modellplatte 3 angeordnet. Die Gewindebolzen 27 bestimmen mit ihrer Länge die versetzte Flächenkontur. Hinterschneidungen in Ausformrichtung sind nicht darstellbar.

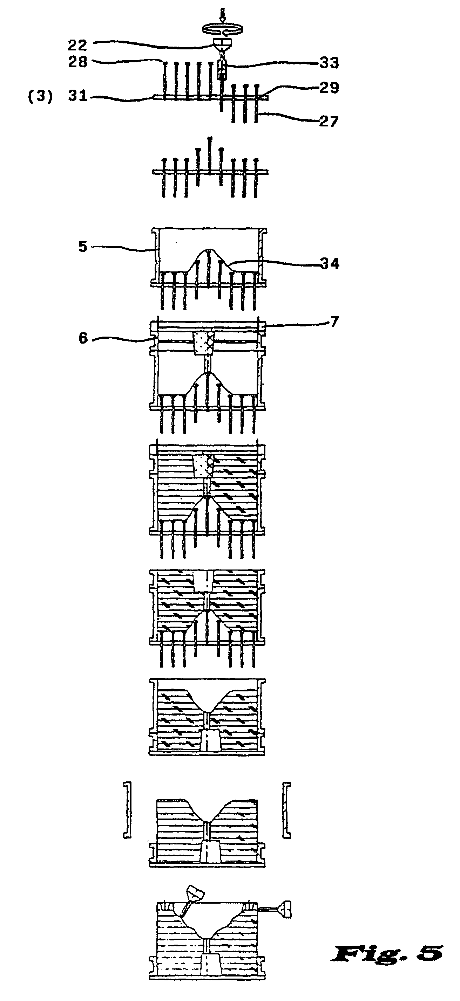

Die Modelleinrichtung 4 entsteht durch definiertes Hineindrehen von mehreren Gewindebolzen 27 in Gewindebohrungen 29, was in der Figur 5 schematisiert dargestellt ist. Die Gewindebohrungen 29 befinden sich in einer ca. 12 mm dicken Metallplatte 31, zum Beispiel aus Stahlblech, die auf einem etwa 200 mm hohen Rahmen 32 befestigt ist. Die Gewindebohrungen 29 können in einem Raster in X - und Y - Richtung angeordnet werden. In die Gewindebohrungen 29 werden die Gewindebolzen 27 hineingeschraubt. Alle Gewindebolzen 27 werden auf einheitliche Höhe von Oberkante Zylinderbolzen 27 zur Metallplatte 31 eingestellt. Jeder Zylinderbolzen 27 hat einen etwa 10 mm hohen Kopf 28 ähnlich einer Schraube mit Innensechskant oder dergleichen. Damit wird ein Formschluß zu einem Schraubwerkzeug 33 hergestellt. Jeder Gewindebolzen 27 kann somit einen Hub innerhalb der Höhe des Rahmens 32 realisieren. Dies entspricht der maximal abformbaren Tiefe durch die Modelleinrichtung 4.

Die Modellplatte 3 bildet die X - Y - Ebene der Modelleinrichtung 4, auf die das Raster der Gewindebolzen 27 übertragbar ist. Jedem Rasterpunkt wird ein Höhenwert, der im gewählten Ausführungsbeispiel zwischen 10 und 190 mm rangieren kann, dem jeweiligen Gewindebolzen 27 in Z - Richtung von der Modellplatte 3 ausgehend zugeordnet. Diese Zuordnung wird zur Programmierung der Fräsmaschine für das Einschrauben der Gewindebolzen 27 genutzt. Die Übertragung der Oberflächenkontur auf die Modelleinrichtung 4 kann in der Fräsmaschine erfolgen. Die Fräsmaschine arbeitet nun als Handhabungsroboter. Hierzu werden die Funktionen der X -, Y - und Z - Achse sowie der Arbeitsspindel für das Schrauben ähnlich dem Gewindeschneiden genutzt. Voraussetzung ist, daß die Steuerung der Maschine das Gewindeschneiden ohne Gewindeschneideinrichtung unterstützt. Die Modelleinrichtung 4 wird dazu in der Maschine positioniert und gespannt. Dabei ist darauf zu achten, daß der an der Modelleinrichtung 4 festgelegte Werkstücknullpunkt mit dem programmierten Werkstücknullpunkt übereinstimmt. In der Werkzeugaufnahme 22 ist ein Schraubwerkzeug 33 befestigt, welches beim Auffahren auf den als Schraubenkopf ausgebildeten Kopf 28 einen Drehwinkelversatz des Gewindebolzens 27 ausgleicht, um ein Anschnäbeln zu realisieren. In X - und Y - Richtung wird die entsprechende Position des Gewindebolzens 27 angefahren. Durch Rechtsdrehen der Arbeitsspindel und Nachführen in Z - Richtung wird der Gewindebolzen 27 eingeschraubt und auf definierte Höhe gebracht. Sind alle Gewindebolzen 27 eingestellt, wird die Modelleinrichtung 4 aus der Maschine entnommen. Über die durch Gewindebolzen 27 abgebildete Modelleinrichtung 4 wird ein formnachgiebiges Gewebe 34 gelegt oder gespannt. Auf die Modelleinrichtung 4 werden die verschraubten Seitenwände 5 des Formkastens 2 aufgesetzt. Anschließend wird die Modelleinrichtung 4 mit einer dünnen Folie ausgekleidet. Nun wird der oben beschriebene Hilfsrahmen 6 und der Füllrahmen 7 aufgesetzt, das Gieß - und Speisesystem 17 montiert und die Form mit kaltaushärtenden Gießereiformstoff gefüllt und verdichtet.

Nach dem Erreichen der Ausschalfestigkeit wird die Rohform um 180° gewendet und die Modelleinrichtung 4 gezogen. Die Seitenwände 5 des Formkastens 2 sowie das Gewebe 34 und die Trennfolie werden entfernt. Die Modelleinrichtung 4 ist wiederverwendbar, nachdem alle Gewindebolzen 27 wieder auf eine einheitliche Höhe eingestellt wurden. Dieser Vorgang erfolgt von Hand oder automatisch.

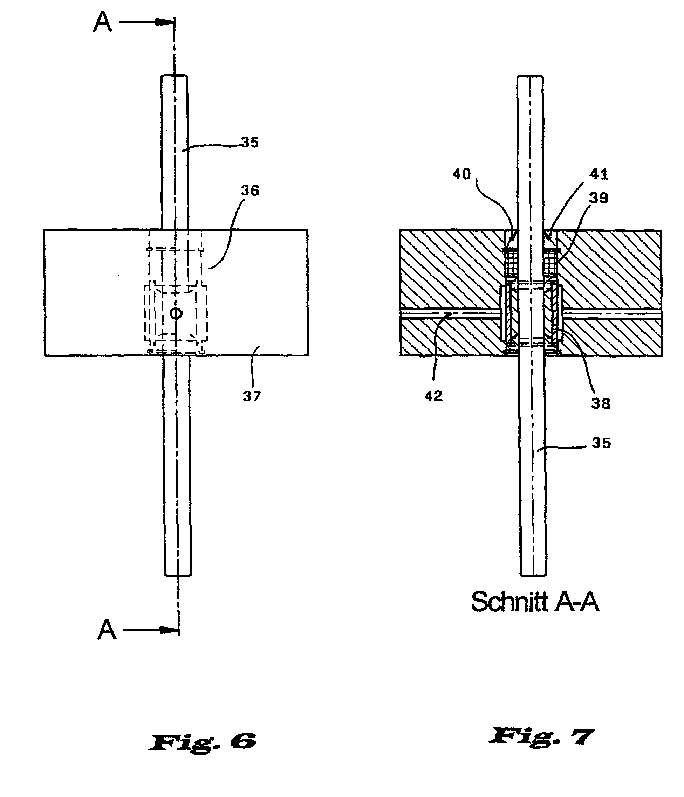

Eine weitere Variante der Herstellung der Rohform 1 aus kaltaushärtbaren Gießereiformstoff mittels variabler Modelleinrichtung 4 weist eine Anordnung klemmbarer Rundstäbe 35 auf, die in Figur 6 bis 8 dargestellt sind. Außerdem wird auf Figur 4 Bezug genommen.

Das Raster des Formkastens 2, der mit dem Formkasten 2 in Figur 4 in der Draufsicht identisch ist, ist ein Vielfaches des Abstands der Rundstäbe 35. Mittels CAD - System werden die Rundstäbe 35 im Raster auf der Ebene der Modellplatte 3 angeordnet. Die Rundstäbe 35 werden in ihrer Länge durch die versetzte Flächenkontur begrenzt. Hinterschneidungen in Ausformrichtung sind nicht darstellbar.

Die Modelleinrichtung 4 entsteht durch definiertes Hineindrücken der Rundstäbe 35 in Klemmaufnahmen 36. Die Klemmaufnahmen 36 sitzen in einer dicken Platte 37 aus Metall, die in Figur 6 veranschaulicht und deren Maß für den Fall im Ausführungsbeispiel mit 50 mm angenommen ist. Die Platte 37 ist auf dem Rahmen 32 in Figur 4 befestigt, der in etwa die gleiche Höhe wie die Seitenwand 5 des Formkastens 2 aufweist. Die Klemmaufnahmen 36, die in Figur 7 im Schnitt dargestellt sind, bestehen jeweils aus einer hydraulisch betätigten Klemmbuchse 38, die handelsüblich ist, und einem Kunststoff- Klemmring 39, zwei Bohrungssicherungsringen 40 und zwei Abstreifringen 41. Die Klemmaufnahmen 36 sind in einem Raster von ca. 30 mm in X - und Y - Richtung angeordnet. Die Kunststoff - Klemmringe 39 sitzen über den Klemmbuchsen 38 und gestatten ein axiales Verschieben der Rundstäbe 35 nur unter leichter Krafteinwirkung. Die Kunststoff- Klemmringe 39 sollen ein Herausfallen der Rundstäbe 35 beim Entspannen der Klemmbuchsen 38 verhindern. Zwischen Rundstäben 35 und Klemmringen 39 wurde eine leichte Preßpassung gewählt. Zu jeder Klemmbuchse 38 führt eine Hydraulikzuleitungsbohrung 42. Um diese Zuleitung auf geringstem Raum und in der Fläche zu realisieren, ist es sinnvoll die Platte 37 aus streifenformigen Segmenten gleicher Länge zusammenzusetzen. Die Hydraulikzuleitungsbohrungen 42 sind in den streifenförmigen Segmenten angeordnet und untereinander verbunden. Die Rundstäbe 35 haben im Ausführungsbeispiel eine Länge von circa 240 mm, einen Durchmesser von 10 mm und sind zum Innendurchmesser der Klemmbuchse 38 so geschliffen, daß eine Übergangspassung erreicht wird. Jeder Rundstab 35 kann einen Hub von ca. 180 mm realisieren. Dies entspricht der maximalen Formtiefe des Formkastens 2.

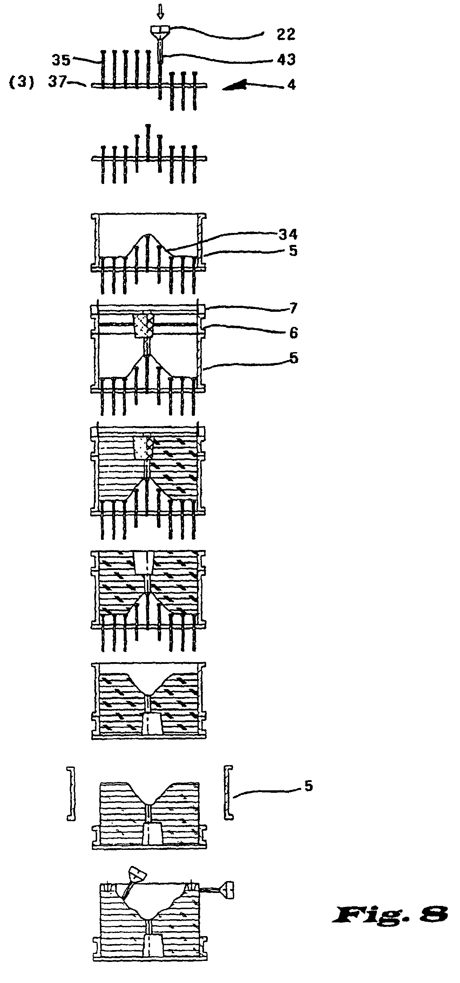

Auf die Modellplatte 3 wird das Raster der Rundstäbe 35 übertragen. Jedem Rasterpunkt wird ein Höhenwert ca. zwischen 10 und 190 mm des jeweiligen Rundstabes 35 in Z - Richtung von der Grundfläche ausgehend zugeordnet. Diese Zuordnung wird zur Programmierung der Fräsmaschine für das Hineindrücken der Rundstäbe 35 genutzt. Die Erstellung der Oberflächenkontur der Modelleinrichtung 4 gemäß Figur 8 kann in der Fräsmaschine erfolgen. Die Fräsmaschine arbeitet nun als Handhabungsroboter. Hierzu werden die Funktionen der X -, Y - und Z - Achse genutzt. Die Modelleinrichtung 4 wird in der Maschine positioniert und gespannt. Dabei ist darauf zu achten, daß der an der Modelleinrichtung 4 festgelegte Werkstücknullpunkt mit dem programmierten Werkstücknullpunkt übereinstimmt. In der Werkzeugaufnahme 22 wird ein Druckbolzen 43 befestigt, während die Arbeitsspindel stillgesetzt ist. In X - und Y - Richtung wird die entsprechende Position des Rundstabes 35 angefahren. Durch Fahren des Druckbolzens 43 in Z - Richtung wird der Rundstab 35 in die Klemmaufnahme 36 hineingedrückt und auf definierte Höhe gebracht. Sind alle Rundstäbe 35 eingestellt, werden diese durch hydraulischen Klemmdruck arretiert. Der Hydraulikdruck wird über eine Handpumpe erzeugt, die an der Modelleinrichtung 4 befestigt ist. Die hydraulische Klemmung bleibt während der Aushärtephase des Formstoffs erhalten. Nun wird die Modelleinrichtung 4 aus der Maschine entnommen. Über die durch Rundstäbe 35 gebildete Modelleinrichtung 4 wird ein formnachgiebiges Gewebe 34 gelegt oder gespannt. Auf die Modelleinrichtung 4 werden die verschraubten Seitenwände 5 des Formkastens 2 aufgesetzt. Anschließend wird die Modelleinrichtung 4 mit Folie ausgekleidet. Nun wird der oben beschriebene Hilfsrahmen 6 und ein Füllrahmen 7 aufgesetzt, das Gieß - und Speisesystem 17 montiert und die Form mit kaltaushärtenden Gießereiformstoff gefüllt.

Nach Erreichen der Ausschalfestigkeit wird die Rohform um 180° gewendet und die Modelleinrichtung 4 gezogen. Die Seitenwände 5 des Formkastens 2 sowie das Gewebe 34 und die Folie werden entfernt. Die Modelleinrichtung 4 ist wiederverwendbar, nachdem alle Rundstäbe 35 nach Aufheben der hydraulischen Klemmung wieder auf eine einheitliche Höhe von ca. 190 mm eingestellt wurden. Dieser Vorgang erfolgt von Hand oder automatisch.

## Patentansprüche

1. Verfahren zum Herstellen einer verlorenen Gießform für Gußstücke aus Metall sowie für die Fertigung von Gußteilprototypen und Einzelstücken im kleinen und mittleren Größen - und Stückmassebereich, durch Bearbeitung einer unter Verwendung von aushärtbaren Bindemitteln hergestellten Gießform aus Gießereiformstoffen, unter Verwendung eines variablen oder festen Formkastens, **dadurch gekennzeichnet, daß** mittels CAD - System aus der Kontur der Gießform die Kontur einer zu bearbeitende Rohform (1) generiert und auf eine Modelleinrichtung (4) übertragen wird, wobei nachfolgend mit der Modelleinrichtung (4) die zu bearbeitende Rohform (1) hergestellt wird, welche volumenmäßig die Sollkonturen der Gießform und eine Bearbeitungszugabe enthält und eine Druckfestigkeit von mindestens 80 kg / cm² aufweist, wobei nach dem Auffüllen des Formkastens (2) mit aushärtbaren Gießereiformstoffen, dem Entformen und dem vollständigen Aushärteten des Formstoffs, die Rohform (1) durch Abtragen der Bearbeitungszugabe durch Formstoff- Fräsen mit hohen Drehzahlen in die Gießform überführt wird.

2. Verfahren nach Anspruch 1, **dadurch gekennzeichnet, daß** bei Fräsbearbeitung über Kopf oder bei Fräsbearbeitung in der Vertikalen der bei der Hochgeschwindigkeitsbearbeitung anfallende Materialabtrag durch Ausnutzung der Schwerkraft abgeführt wird.

3. Verfahren nach Anspruch 1, **dadurch gekennzeichnet, daß** der bei der Fräsbearbeitung anfallende Materialabtrag nach unten durch Löcher in der Rohform (1) durch Absaugen abgeführt wird.

4. Verfahren nach Anspruch 1, **dadurch gekennzeichnet, daß** die Fräsbearbeitung in drei oder fünf Achsen in der Horizontalen und der Materialabtrag außerhalb der Maschinenhauptzeit vorgenommen wird, wobei der Materialabtrag schichtweise durch kontumahes Abfahren der Formkontur (21) durch Absaugen mittels Absaugeinrichtung entfernt wird, wobei nach jeder abgetragenen Materialschicht ein senkrechtstehendes Saugrohr in die Werkzeugaufnahme (22) der Fräs - Spindel eingewechselt und das Fräswerkzeug (23) während der Absaugung zwischengeparkt wird.

5. Variable Modelleinrichtung zur Durchführung des Verfahrens nach einem oder mehreren der Ansprüche 1-4 mit einer mit dem Formkasten verriegelbaren Modellplatte, **dadurch gekennzeichnet, daß** die Modelleinrichtung eine mittels CAD - System aus der Kontur der Gießform generierte Kontur der zu bearbeitenden Rohform (1) aufweist und die Kontur der Rohform (1) mit Balkensegmenten (25) und / oder Würfeln (14) nachgebildet ist, die eine Grundfläche aus Stahl (15) aufweisen und auf einer magnetisierbaren Modellplatte (3) fixierbar sind.

6. Variable Modelleinrichtung zur Durchführung des Verfahrens nach einem oder mehreren der Ansprüche 1 - 4 mit einer mit dem Formkasten verriegelbaren und auf einem Rahmen stehenden Modellplatte mit höhenverstellbaren Stäben, **dadurch gekennzeichnet, daß** die Stäbe aus einer Anordnung von Gewindebolzen (27) bestehen, die einen Hub innerhalb der Höhe des Rahmen (32) aufweisen, wobei mittels CAD - System aus der Kontur der Gießform die Kontur der zu bearbeitende Rohform (1) generiert und auf die Modelleinrichtung (4) durch definiertes Hineindrehen der Gewindebolzen (27) in Gewindebohrungen (29) übertragen ist.

7. Variable Modelleinrichtung zur Durchführung des Verfahrens nach einem oder mehreren der Ansprüche 1 - 4 mit einer mit dem Formkasten verriegelbaren und auf einem Rahmen stehenden Modellplatte mit höhenverstellbaren Stäben, **dadurch gekennzeichnet, daß** mittels CAD - System aus der Kontur der Gießform die Kontur der zu bearbeitende Rohform (1) generiert und auf die Modelleinrichtung (4) mit einer rasterförmigen Anordnung klemmbarer Rundstäbe (35) übertragen ist, wobei durch definiertes Hineindrücken in eine auf dem Rahmen (32) ruhende Platte (37) aus Metall mit Klemmaufnahmen (36) die Kontur der Modelleinrichtung (4) abgebildet ist.

8. Variable Modelleinrichtung nach Anspruch 7, **dadurch gekennzeichnet, daß** die Klemmaufnahmen (36) in einer dicken oder aus streifenförmigen Segmenten gleicher Länge zusammengesetzen Platte (37) aus Metall mit zu Klemmaufnahmen (36) führenden Hydraulikzuleitungsbohrungen (42) angeordnet sind.

9. Variable Modelleinrichtung nach Anspruch 7 bis 8, **dadurch gekennzeichnet, daß** die Klemmaufnahmen (36) jeweils eine hydraulisch betätigten Klemmbuchse (38), einen Kunststoff- Klemmring (39), zwei Bohrungssicherungsringe (40) und zwei Abstreifringe (41) umfaßt.

## Claims

1. Method for the production of an investment casting mold for castings made of metal and for the manufacture of cast component prototypes and individual components in small and medium sizes and volume ranges, by the machining of a casting mold from foundry molding materials, manufactured by making use of hardenable bonding agents, and making use of a variable or fixed molding box, **characterized in that** by means of a CAD system the contour of a blank mold (1) which is to be machined is generated from the contour of the casting mold, and is transferred to a model assembly (4), whereby the blank mold (1) which is to be machined is subsequently produced with the model assembly (4), which with regard to volume contains the specified contours of the casting mold and a machining allowance, as well as a pressure resistance of at least 80 kg/cm2, whereby, after the casting box (2) has been filled with hardenable foundry molding materials, removal from the mold, and the complete hardening of the molding material, the blank mold (1) is transferred into the casting mold by removing material according to the machining allowance by high-speed milling of the molding material.

2. Method according to Claim 1, **characterized in that**, with the milling machining being carried out overhead or with the milling machining being carried out in the vertical, the waste material incurred during the high-speed machining is conducted away by the force of gravity.

3. Method according to Claim 1, **characterized in that** the waste material incurred during the milling machining is conducted away downwards through holes in the blank mold (1) by suction extraction.

4. Method according to Claim 1, **characterized in that** the milling machining is carried out in three or five axes in the horizontal, and the material removal is carried out outside the main machine operational time, whereby the material is removed layer by layer by the movement of the mold contour (21) close to the contour, by suction extraction by means of a suction device, and whereby, after each material layer has been conducted away, a vertical suction pipe is placed in the tool mounting (22) of the milling spindle, and the milling tool (23) is temporarily parked during the suction extraction process.

5. Variable model device for the performance of the method according to one or more of Claims 1-4, with a model plate capable of being interlocked with the molding box, **characterized in that** the model device features a contour of the blank mold (1) which is to be machined, said contour being generated by means of a CAD system from the contour of the casting mold, and the contour of the blank mold (1) is formed with beam segments (25) and/or cubes (14), which feature a base surface made of steel (15) and are capable of being fixed on a magnetizable model plate (3).

6. Variable model device for the performance of the method according to one or more of Claims 1-4, with a model plate capable of being interlocked with the molding box, and model plate with height-adjustable bars standing on a frame, **characterized in that** the bars consist of an arrangement of threaded bolts (27), which feature a lift within the height of the frame (32), whereby the contour of the blank mold (1) which is to be machined is generated by means of CAD system from the contour of the casting mold, and is transferred to the model device (4) by defined inwards rotation of the threaded bolts (27) into threaded holes (29).

7. Variable model device for the performance of the method according to one or more of Claims 1-4, with a model plate with height-adjustable bars, said plate capable of being interlocked with the molding box and standing on a frame, that the contour of the blank mold (1) which is to be machined is generated by means of a CAD system from the contour of the casting mold and is transferred onto the model device (4) with a circular bar (35), capable of being clamped in a grid-pattern arrangement, and whereby the contour of the model device (4) is formed by defined pressing into a plate (37) made of metal and resting on the frame (32), with clamp mounts (36).

8. Variable model device according to Claim 7, **characterized in that** the clamp mounts (36) are arranged in a plate (37) made of metal, with hydraulic hose drillholes (42) leading to clamp mounts (36), said plate either being thick or composed of strip-shaped segments of the same length.

9. Variable model device according to Claims 7 to 8, **characterized in that** the clamp mounts (36) each comprise a hydraulically-actuated clamping sleeve (38), a plastic clamping ring (39), two drillhole securing rings (40) and two scraping rings (41).

## Revendications

1. Procédé de production d'un moule de coulée perdue pour la coulée de pièces en métal ainsi que la fabrication de prototypes de pièces coulées et de pièces individuelles de dimensions et de masses petites et moyennes par usinage d'un moule de coulée produit en utilisant des liants durcissables provenant de matières de moule de coulée, en utilisant un châssis de moule variable ou fixe **caractérisé en ce qu'**à l'aide d'un système DAO, on génère, à partir du contour du moule de coulée, le contour d'une ébauche de moule (1) et qu'on le copie sur un ensemble modèle (4), par la suite l'ébauche de moule (1) à usiner, qui présente en ce qui concerne le volume les contours exigés du moule de coulée et ainsi qu'une surépaisseur d'usinage et une résistance à la pression d'au moins 80 kg/cm², étant fabriquée avec l'ensemble modèle (4), après remplissage du châssis de moule (2) avec des matières de moule de coulée durcissables et après le démoulage et le durcissement total de la matière, donnant à l'ébauche de moule (1) sa forme de moule de coulée en enlevant sa surépaisseur d'usinage par fraisage de matière à haute vitesse.

2. Procédé selon la revendication 1 **caractérisé en ce que** lors du fraisage par le dessus ou lors du fraisage à la verticale, l'enlèvement de matière provenant de l'usinage à haute vitesse est évacué par utilisation de la force centrifuge.

3. Procédé selon la revendication 1 **caractérisé en ce que**, l'enlèvement de matière provenant du fraisage est évacué par aspiration par le bas par des trous dans l'ébauche de moule (1).

4. Procédé selon la revendication 1 **caractérisé en ce que** le fraisage s'effectue en trois ou cinq axes à l'horizontale et que l'enlèvement de matière s'effectue en dehors du temps principal de machine, l'enlèvement de matière étant évacué par couche par éloignement proche du contour du contour de moule (21) par aspiration par un dispositif d'aspiration, après chaque couche de matière enlevée, un tube d'aspiration à la verticale étant entré dans le logement d'outil (22) de la broche de fraise et l'outil de fraise (23) étant mis sur le côté momentanément pendant l'aspiration.

5. Ensemble modèle variable pour l'exécution du procédé selon une ou plusieurs des revendications 1 - 4 avec une plaque modèle verrouillable avec le châssis de moule **caractérisé en ce que** l'ensemble modèle présente un contour de l'ébauche de moule (1) à usiner généré à l'aide d'un système DAO à partir du contour du moule de coulée et que le contour de l'ébauche de moule (1) est copié avec des segments à barres (25) et / ou des dés (14) présentant une surface de base en acier (15) et fixés sur une plaque modèle (3) pouvant être magnétisée.

6. Ensemble modèle variable pour l'exécution du procédé selon une ou plusieurs des revendications 1 - 4 avec une plaque modèle à tiges à réglage de hauteur verrouillable avec le châssis de moule et se trouvant sur un cadre **caractérisé en ce que** les tiges se composent d'une disposition de boulons filetés présentant une course dans la hauteur du cadre (32), le contour de l'ébauche de moule (1) à usiner étant généré à l'aide d'un système DAO à partir du contour du moule de coulée et reporté sur l'ensemble modèle (4) par une introduction par rotation définie des boulons filetés (27) dans les trous taraudés (29).

7. Ensemble modèle variable pour l'exécution du procédé selon une ou plusieurs des revendications 1 - 4 avec une plaque modèle à tiges à réglage de hauteur verrouillable avec le châssis de moule et se trouvant sur un cadre **caractérisé en ce que** le contour de l'ébauche de moule (1) à usiner est généré à l'aide d'un système DAO à partir du contour du moule de coulée et reporté sur l'ensemble modèle (4) avec une disposition en trame de tiges rondes (35) serrables, le contour de l'ensemble modèle (4) étant formé par un enfoncement par rotation défini dans une plaque (37) en métal posant sur le cadre (32) avec logements de serrage (36).

8. Ensemble modèle variable selon la revendication 7 **caractérisé en ce que** les logements de serrage (36) sont disposés dans une plaque (37) en métal épaisse ou composée de segments en forme de bande de même longueur avec trous de conduite d'amenée hydraulique (42) menant aux logements de serrage (36).

9. Ensemble modèle variable selon les revendications 7 à 8 **caractérisé en ce que** les logements de serrage (36) comprennent respectivement une douille de serrage (38) à action hydraulique, une bague de serrage (39) en matière plastique, deux bagues de sécurité de trous (40) et deux bagues racleuses (41).
